# EUROPEAN PATENT SPECIFICATION

(11) **EP 2 728 815 B1**
(45) Date of publication and mention of the grant of the patent: **05.08.2015**
(21) Application number: 12807947.2
(22) Date of filing: 27.06.2012
(51) Int. Cl.: H04L 12/70, H04L 12/721, H04L 12/751

(54) **METHOD AND RBRIDGE FOR AVOIDING ESADI PROTOCOL PACKET STORMS**
VERFAHREN UND BRÜCKE ZUR VERMEIDUNG VON ESADI-PROTOKOLLPAKETSTÜRMEN
PROCÉDÉ ET PONT RACINE SERVANT À ÉVITER LA GÉNÉRATION D'UNE GRANDE QUANTITÉ DE PAQUETS DANS UN PROTOCOLE ESADI

(30) Priority: 01.07.2011 CN 201110184102
(43) Date of publication of application: 07.05.2014
(73) Proprietor: ZTE Corporation, Shenzhen, Guangdong 518057 (CN)
(72) Inventor: HU, Fangwei, Shenzhen Guangdong 518057 (CN); ZHAI, Hongjun, Shenzhen Guangdong 518057 (CN); CHENG, Mingjiang, Shenzhen Guangdong 518057 (CN)
(74) Representative: Schröer, Gernot H.
(86) International application number: PCT/CN2012/077664
(87) International publication number: WO 2013/004140

(56) References cited:
- WO-A1-2010/111142
- CN-A- 101 431 471
- CN-A- 101 453 413
- CN-A- 102 075 438
- US-A1- 2009 268 731
- US-A1- 2011 019 671
- RADIA PERLMAN INTEL LABS DONALD EASTLAKE HUAWEI ANOOP GHANWANI BROCADE: "RBridges: Multilevel TRILL; draft-perlman-trill-rbridge-multilevel-02. txt", RBRIDGES: MULTILEVEL TRILL; DRAFT-PERLMAN-TRILL-RBRIDGE-MULTILEVEL-02. TXT, INTERNET ENGINEERING TASK FORCE, IETF; STANDARDWORKINGDRAFT, INTERNET SOCIETY (ISOC) 4, RUE DES FALAISES CH- 1205 GENEVA, SWITZERLAND, no. 2, 5 April 2011 (2011-04-05), pages 1-22, XP015075170, [retrieved on 2011-04-05]

## Description

### Technical Field

The present document relates to the network communication technology, and in particular, to a method and RBridge for avoiding End Station Address Distribution Information (ESADI for short) protocol packet storms.

### Background of the Related Art

The Transparent Interconnection of Lots of Links (TRILL) is a standard recommended by the Internet Engineering Task Force (IETF), used for cover the shortage of the Spanning Tree protocol (STP) in the large-scale data center. In the L2 network, the STP avoids the looping by blocking the redundant link, and it causes the waste of the redundant link bandwidth (blocked) at the same time. By introducing the Intermediate System to Intermediate System (IS-IS) routing protocol into the L2 network, the TRILL solves the looping problem of the L2, and keeps the L2 multipath, or called Equivalent Cost Multiple Path (ECMP) at the same time.

In the TRILL network, the equipment running the TRILL protocol is called the RBridge (Routing Bridge), and the equipment hooking at the RBridge, such as host computer, server, etc., is called the end station. At the entrances and exits of the TRILL network, the RBridge needs to provide the service to the end station, so the RBridge needs to have certain understanding of the Media Access Control (MAC) information of the end station in the network.

At present, the RBridge obtains the MAC information mainly by the following ways:
1). self-learning way: learning the MAC address information through the capsulation/decapsulation of the TRILL data frame;
2). staring the ESADI protocol, and notifying and learning the MAC information with each other;
3). learning the MAC information by the way of the end station registration.

Wherein, the self-learning way is the simplest and the most convenient, and the resources are consumed minimally, but the timeliness is bad; the registration way can only learn and obtain the MAC information of the local end station, and the end station needs to support the registration protocol too; the ESADI only runs on the RBridge, and the RBridge with the enabled ESADI can know the change of the MAC information on other RBridges in time by releasing the local MAC information actively, which has the advantages such as, high credibility, low taken resources etc., and is one of the main ways of learning the MAC information among the RBridges.

In the current TRILL protocol, the ESADI protocol message is capsulated as the data message of the TRILL, and the information is interacted among the ESADI RBridges by sending the ESADI protocol message, to form the logical interconnection. The ESADI protocol message is sent along the distributing tree by way of the multicast data message of the TRILL, and traverses the whole TRILL network of the Virtual Local Area Network (VLAN) where that ESADI is located, and this message transmission way wastes a large amount of bandwidth, and especially when there is a new ESADI RBridge joining the network, it is easy to form the ESADI protocol packet storms. When there is a newly joining ESADI RBridge, that ESADI RBridge will send the Link State Protocol Data Unit (LSP) message to the network by way of multicast, wherein, the MAC address information of the end station to which the bridge adheres is carried therein; and other ESADI bridges will also send the LSP message to the network by way of multicast after receiving the LSP message of that bridge. When the network size is larger and when there are more end stations to which the RBridge adheres, the number of the LSP messages will be very large, so as to form the multicast storms. And the LSP messages, regarded as the ESADI protocol messages, will be reported to the Central Processing Unit (CPU) of the RBridge for processing, and reporting a large amount of LSP messages will aggravate the CPU burden and even will make the CPU collapse, which will cause the huge influence on the equipment and the network.

CN 102075438 A only discloses performing transparent interconnection over lots of links (TRILL) package on a unicast data frame, adding path mapping information and/or a path mapping strategy in a TRILL header, and transmitting the packaged unicast data frame.

### Summary of the Invention

The objective of the present document is to provide a method and RBridge for avoiding End Station Address Distribution Information (ESADI) protocol packet storms, to overcome the disadvantage that reporting a large number of the LSP messages causes great influence on the equipment and the network in the related art.

In order to solve the above-mentioned problem, the embodiment of the present document provides a method as defined in the present independent claims, for avoiding End Station Address Distribution Information (ESADI) protocol packet storms, comprising:
when an RBridge discovers a newly joining neighbor, the RBridge sends a Link State Protocol Data Unit (LSP) message to the neighbor by means of unicast.

Preferably, the RBridge determines a delay duration for sending the LSP message according to a priority of the present RBridge after discovering the newly joining neighbor;
wherein, the RBridge sends the LSP message after the delay duration passed by after the newly joining neighbor is discovered.

Preferably, a delay duration value determined for an RBridge with a high priority is less than a delay duration value determined for an RBridge with a low priority.

Preferably, the LSP message sent to the neighbor by the RBridge carries link state information generated by the present RBridge.

Preferably, that the RBridge discovers the newly joining neighbor, comprises:
the RBridge receiving the LSP message sent by the newly joining neighbor.

Correspondingly, the embodiment of the present document further provides an RBridge for avoiding End Station Address Distribution Information (ESADI) protocol packet storms, comprising:
a discovering module, configured to discover a newly joining neighbor; and
a sending module, configured to send a Link State Protocol Data Unit (LSP) message to the neighbor by means of unicast.

Preferably, the sending module is configured to determine a delay duration for sending the LSP message according to a priority of the present RBridge, and sends the LSP message to the neighbor by means of unicast after the delay duration passed by.

Preferably, the sending module is configured as that a delay duration value determined for an RBridge with a high priority is less than a delay duration value determined for an RBridge with a low priority.

Preferably, the LSP message sent to the neighbor by the sending module carries link state information generated by the present RBridge.

Preferably, the discovering module is configured to discover the newly joining neighbor by receiving the LSP message sent by the newly joining neighbor.

Compared with the related art, the embodiment of the present document prevents the multicast storms from generating, avoids generating any major influence on the equipment, and enhances the stability and robustness of networks and equipment.

### Brief Description of Drawings

FIG. 1 is a flow chart of a method for avoiding End Station Address Distribution Information (ESADI) protocol packet storms according to an embodiment of the present document;
FIG. 2 is a structure diagram of an RBridge in an embodiment of the present document;
FIG.3 is a topological structure diagram of an ESADI network in an application example of the present document.

### Preferred Embodiments of the Invention

The embodiment of the present document is described in detail with reference to the accompanying drawings hereinafter. It should be illustrated that, in the case of not conflicting, the embodiments in the present application and features in these embodiments can be combined with each other.

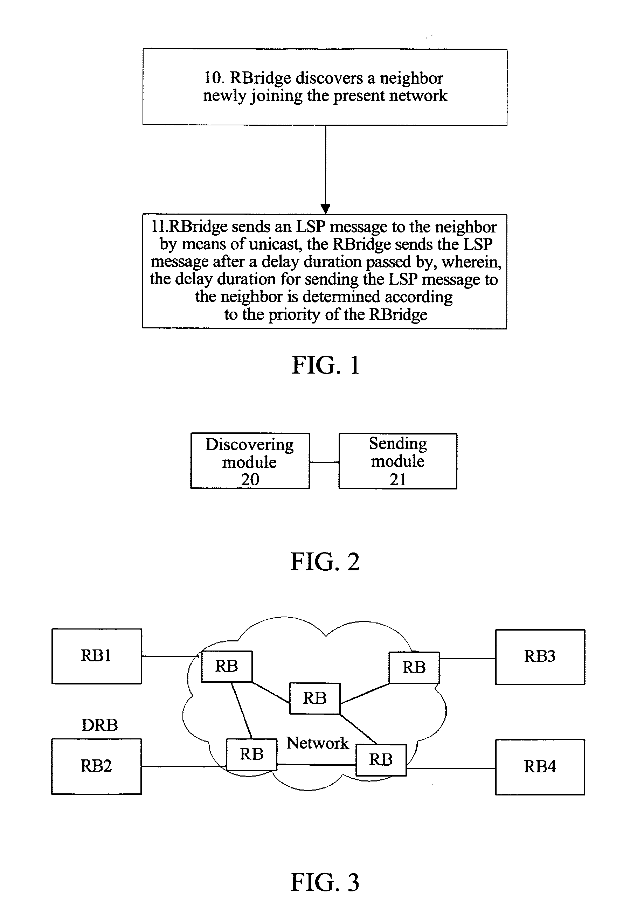

In the present embodiment, a method for avoiding End Station Address Distribution Information (ESADI) protocol packet storms is provided, as shown in FIG. 1, including the following steps:
in step 10, the RBridge in the ESADI network discovers that a neighbor newly joins the present network; that is, the RBridge receives an LSP message sent by the RBridge equipment newly joining the present network;
in step 11, the above-mentioned RBridge sends the LSP message to that neighbor by means of unicast; preferably, the RBridge sends the LSP message after a delay duration passed by, wherein, the delay duration for sending the LSP message to the neighbor is determined according to the priority of the RBridge. The delay duration value determined for the RBridge with a high priority is less than the delay duration value determined for the Rbridge with a low priority, and the delay duration value can be 0.

In addition, in order to further reduce the number of the LSP messages in the network, the LSP message sent by every RBridge in the above-mentioned ESADI network only carries link state information generated locally, and does not include link state information received from the neighbor equipment.

The above-mentioned RBridge equipment joining the ESADI network can be realized by the RBridge equipment enabling the ESADI function, and also can be realized by starting the RBridge equipment with the enabled ESADI function.

In the above-mentioned method the LSP message is sent by means of unicast instead of multicast, which reduces the number of the LSP messages in the network greatly, and determines the transmission time of the LSP message according to the size of the priority value, avoids the situation that a plurality of ESADI bridges send the LSP messages at the same time, and solves the problem of the ESADI protocol message multicast storms.

In the present embodiment, a RBridge for avoiding End Station Address Distribution Information (ESADI) protocol packet storms is provided, as shown in FIG. 2, including:
a discovering module 20, configured to discover a newly joining neighbor; and
a sending module 21, configured to send a Link State Protocol Data Unit (LSP) message to the neighbor by means of unicast.

Preferably, the sending module 20 determines a delay duration for sending the LSP message according to a priority of the present RBridge, and sends the LSP message to the neighbor by means of unicast after the delay duration passed by.

Preferably, a delay duration value determined for an RBridge with a high priority by the sending module 21 is less than a delay duration value determined for an RBridge with a low priority.

Preferably, the LSP message sent to the neighbor by the sending module 21 carries link state information generated by the present RBridge.

Preferably, the discovering module 20 is configured to discover the newly joining neighbor by receiving the LSP message sent by the newly joining neighbor.

The method for avoiding the ESAD protocol packet storms is further described in details by combining the accompanying drawings.

As shown in FIG. 3, the RB1, RB2 and RB3 are ESADI RBridges, wherein, the RB2 is a DRB (designated RBridge). The RB1, RB2 and RB3 cross over a network composed by a plurality of transmission RBs (RBridge), and the ESADI protocol message is transmitted in the network by way of the TRILL data, and capsulation and decapsulation are only performed in the RB1, RB2 and RB3, and the logical interconnection is formed among them.

RB4 is an RBridge newly joining the present ESADI network, and when the RB4 enables the ESADI function, or after the RB4 with the ESADI function starts, the RB4 sends the LSP 0 segment by way of multicast to the network; the ESADI parameter of the RB4 is carried in the LSP 0 segment, such as priority information, holding time, etc. The target MAC address of the header of that ESADI LSP message is a multicast address "All-RBridges multicast address" (multicast addresses of all RBridges), so that ESADI LSP message will traverse all ESADI RBridges (that is, RB1∼RB3 in the picture) of the VLAN-x where the ESADI network is located along the direction of the distribution tree.

In the current TRILL standard and file, the RB1∼RB3 will respond to the RB4 with the ESADI LSP message of the multicast address "All-RBridges multicast address". After those multicast messages are sent out, the RBridges in the ESADI network where the VLAN-x is located will all receive the message, and the above-mentioned LSP message carries the information such as the MAC address information of the end station to which the ESADI RBridge adheres, etc. In the data center network, there are generally a very large number of the end stations (that is, the servers), to which the RBridge adheres, so the number of the LSP message will be very large, which may lead to the situation that a large amount of ESADI LSP messages appear instantly in the network, and then cause the multicast storms.

By using the method provided by the present embodiment, the RB1, RB2 and RB3 will determine the time for responding to the LSP message by the present equipment according to the value of its own priority separately after receiving the LSP 0 Segment message sent by the RB4. Because the RB2 is the DRB, and the priority is the highest, the RB2 sends the LSP message by means of unicast at first, and the message includes the information, such as, the MAC addresses of all end stations to which the RB2 adheres. Because that LSP message is sent with the unicast address, the RB1 and the RB3 will not receive the LSP message, and only the newly joining RB4 will receive the LSP message. The RB1 or the RB3 will also send the LSP message after a corresponding time delay passed by, thus the instantaneous multicast message storms would not be caused, which improves the stability of the equipment and the network.

It can be understood by those skilled in the art that all or part of steps in the above-mentioned method can be fulfilled by programs instructing the relevant hardware, and the programs can be stored in a computer readable storage medium such as a read only memory, a magnetic disk or an optical disk, etc. Alternatively, all or part of the steps in the above-mentioned embodiments can be implemented with one or more integrated circuits. Accordingly, each module/unit in the above-mentioned embodiments can be implemented in the form of hardware, or in the form of software function module.

The above description is only the preferred embodiments of the present document and is not intended to limit the protection scope of the present document. The present document can have a variety of other embodiments according to the summary of the invention. Those skilled in the art can make the corresponding modifications and variations according to the present document. All of modifications, equivalents and/or variations of the present document should be embodied in the scope of the appended claims of the present document.

### Industrial Applicability

The embodiment of the present document prevents the multicast storms from generating, avoids generating any major influence on the equipment, and enhances the stability and robustness of networks and equipment.

## Claims

1. A method for avoiding End Station Address Distribution Information (ESADI) protocol packet storms, comprising:
an RBridge (RB4) newly joining the ESADI network sends a Link State Protocol Data Unit (LSP) - message to the network by way of multicast;
when an RBridge (RB1, RB2, RB3) in the present ESADI network discovers the newly joining RBridge neighbor (RB4), that is, the RBridge (RB1, RB2, RB3) in the present ESADI network receives the LSP message sent by the RBridge (RB4) newly joining the network, the RBridge (RB1, RB2, RB3) in the present ESADI network sends a LSP message to the RBridge (RB4) newly joining the network by means of unicast.

2. The method according to claim 1, further comprising:
determining a delay duration for sending the LSP message according to a priority of the present RBridge;
wherein, the RBridge sends the LSP message after the delay duration passed by after the newly joining neighbor is discovered.

3. The method according to claim 2, wherein:
a delay duration value determined for an RBridge with a high priority is less than a delay duration value determined for an RBridge with a low priority.

4. The method according to claim 1 or 2 or 3, wherein:
the LSP message sent to the neighbor by the RBridge carries link state information generated by the present RBridge.

5. The method according to claim 1, wherein:
that the RBridge discovers the newly joining neighbor, comprises:
the RBridge receiving the LSP message sent by the newly joining neighbor.

6. An RBridge for avoiding End Station Address Distribution Information (ESADI) protocol packet storms, is adapted to carry out the method as defined in any of claims 1-5, comprising:
a discovering module (20), configured to discover a newly joining neighbor; and
a sending module (21), configured to send a link state protocol data unit (LSP) message to the neighbor by means of unicast.

7. The RBridge according to claim 6, wherein:
the sending module is configured to determine a delay duration for sending the LSP message according to a priority of the present RBridge, and sends the LSP message to the neighbor by means of unicast after the delay duration passed by.

8. The RBridge according to claim 7, wherein:
the sending module is configured as that a delay duration value determined for an RBridge with a high priority is less than a delay duration value determined for an RBridge with a low priority.

9. The RBridge according to claim 6 or 7 or 8, wherein:
the LSP message sent to the neighbor by the sending module carries link state information generated by the present RBridge.

10. The RBridge according to claim 7, wherein:
the discovering module is configured to discover the newly joining neighbor by receiving the LSP message sent by the newly joining neighbor.

## Patentansprüche

1. Verfahren zur Vermeidung von ESADI-Protokoll-Paketstürmen (End Station Address Distribution Information), welches die folgenden Schritte umfasst:
eine R-Brücke (RB4), welche sich neu an das ESADI-Netzwerk anschließt, sendet per Sammelsendung an das Netzwerk eine Meldung in Form einer Dateneinheit im Verbindungszustandsprotokoll (LSP);
wenn eine R-Brücke (RB1, RB2, RB3) im vorhandenen ESADI-Netzwerk den sich neu anschließenden R-Brücken-Nachbarn (RB4) entdeckt, wenn also die R-Brücke (RB1, RB2, RB3) im vorhandenen ESADI-Netzwerk die von der sich neu an das Netzwerk anschließenden R-Brücke (RB4) ausgesendete LSP-Meldung empfängt, sendet die R-Brücke (RB1, RB2, RB3) im vorhandenen ESADI-Netzwerk mittels Einzelsendung eine LSP-Meldung an die R-Brücke (RB4), die sich neu an das Netzwerk anschließt.

2. Verfahren nach Anspruch 1, welches des Weiteren folgende Schritte umfasst:
Bestimmen der Dauer einer Laufzeit zum Senden der LSP-Meldung in Entsprechung zur Priorität der vorhandenen R-Brücke;
wobei die R-Brücke nach dem Verstreichen der Dauer der Laufzeit nach der Entdeckung des sich neu anschließenden Nachbarn die LSP-Meldung absendet.

3. Verfahren nach Anspruch 2, bei welchem
der Wert der Dauer einer Laufzeit, der für eine R-Brücke mit einer hohen Priorität bestimmt ist, kleiner ist als der Wert der Dauer einer Laufzeit, der für eine R-Brücke mit einer niedrigen Priorität bestimmt wurde.

4. Verfahren nach Anspruch 1 oder 2 oder 3, bei welchem
die von der R-Brücke an den Nachbarn gesendete LSP-Meldung eine von der vorhandenen R-Brücke erzeugte Verbindungszustands-Information mit sich führt.

5. Verfahren nach Anspruch 1, bei welchem
die Entdeckung des sich neu anschließenden Nachbarn durch die R-Brücke folgenden Vorgang umfasst:
die R-Brücke empfängt die von dem sich neu anschließenden Nachbarn ausgesendete LSP-Meldung.

6. R-Brücke zur Vermeidung von ESADI-Protokoll-Paketstürmen (End Station Address Distribution Information), die zur Durchführung des Verfahrens nach einem der Ansprüche 1 bis 5 ausgelegt ist und die folgendes umfasst:
ein Entdeckungsmodul (20), das zum Entdecken eines sich neu anschließenden Nachbarn ausgelegt ist; und
ein Sendemodul (21), das zum Senden einer Meldung in Form einer Dateneinheit im Verbindungszustandsprotokoll (LSP) an den Nachbarn mittels einer Einzelmeldung ausgelegt ist.

7. R-Brücke nach Anspruch 6, bei welcher:
das Sendemodul so ausgelegt ist, dass es die Dauer einer Laufzeit zum Senden der LSP-Meldung in Entsprechung zu einer Priorität der vorhandenen R-Brücke und die LSP-Meldung an den Nachbarn mittels einer Einzelsendung nach dem Verstreichen der Dauer der Laufzeit.

8. R-Brücke nach Anspruch 7, bei welcher:
das Sendemodul in der Weise ausgelegt ist, dass ein Wert der Dauer einer Laufzeit, der für eine R-Brücke mit einer hohen Priorität bestimmt ist, kleiner ist als der Wert der Dauer einer Laufzeit, der für eine R-Brücke mit einer niedrigen Priorität bestimmt ist.

9. R-Brücke nach Anspruch 6 oder 7 oder 8, bei welcher:
die von dem Sendemodul an den Nachbarn gesendete LSP-Meldung eine von der vorhandenen R-Brücke erzeugte Verbindungszustands-Information mit sich führt.

10. R-Brücke nach Anspruch 7, bei welcher
das Entdeckungsmodul so ausgelegt ist, dass es den sich neu anschließenden Nachbarn daran erkennt, dass es die von dem sich neu anschließenden Nachbarn ausgesendete LSP-Meldung empfängt.

## Revendications

1. Procédé pour éviter des excès de paquets de protocole d'informations de distribution d'adresse de station d'extrémité (ESADI), comprenant les étapes suivantes:
un RBridge (RB4) rejoignant nouvellement le réseau ESADI envoie un message d'unité de données de protocole d'état de liaison (LSP) au réseau par multidiffusion;
lorsqu'un RBridge (RB1, RB2, RB3) contenu dans le présent réseau ESADI découvre le RBridge voisin ayant nouvellement rejoint le réseau (RB4), c'est-à-dire, lorsque le RBridge (RB1, RB2, RB3) dans le présent réseau ESADI reçoit le message LSP envoyé par le RBridge (RB4) ayant nouvellement rejoint le réseau, le RBridge (RB1, RB2, RB3) dans le présent réseau ESADI envoie un message LSP au RBridge (RB4) ayant nouvellement rejoint le réseau par monodiffusion.

2. Procédé selon la revendication 1, comprenant en outre l'étape suivante:
déterminer une durée de retard pour envoyer le message LSP en fonction d'une priorité du présent RBridge;
où le RBridge envoie le message LSP après que la durée de retard s'est écoulée après que le voisin ayant nouvellement rejoint le réseau a été découvert.

3. Procédé selon la revendication 2, dans lequel:
une valeur de durée de retard déterminée pour un RBridge avec une priorité élevée est inférieure à une valeur de durée de retard déterminée pour un RBridge avec une faible priorité.

4. Procédé selon la revendication 1 ou 2 ou 3, dans lequel:
le message LSP envoyé au voisin par le RBridge achemine des informations d'état de lien générées par le présent RBridge.

5. Procédé selon la revendication 1, dans lequel:
le fait que le RBridge découvre le voisin ayant nouvellement rejoint le réseau, comprend
que le RBridge reçoive le message LSP envoyé par le voisin ayant nouvellement rejoint le réseau.

6. RBridge pour éviter des excès de paquets de protocole d'informations de distribution d'adresse de station d'extrémité (ESADI), conçu pour exécuter le procédé tel que défini dans l'une quelconque des revendications 1 à 5, comprenant:
un module de découverte (20), conçue pour découvrir un voisin ayant nouvellement rejoint le réseau; et
un module d'envoi (21), conçu pour envoyer un message d'unité de données de protocole d'état de liaison (LSP) au voisin par monodiffusion.

7. RBridge selon la revendication 6, dans lequel:
le module d'envoi est configuré pour déterminer une durée de retard pour envoyer le message LSP en fonction d'une priorité du présent RBridge, et envoie le message LSP au voisin par monodiffusion après que la durée de retard s'est écoulée.

8. RBridge selon la revendication 7, dans lequel:
le module d'envoi est configuré de manière à ce qu'une valeur de durée de retard déterminée pour un RBridge avec une priorité élevée soit inférieure à une valeur de durée de retard déterminée pour un RBridge avec une faible priorité.

9. RBridge selon la revendication 6 ou 7 ou 8, dans lequel:
le message LSP envoyé au voisin par le module d'envoi achemine des informations d'état de lien générées par le présent RBridge.

10. RBridge selon la revendication 7, dans lequel:
le module de découverte est configuré pour découvrir le voisin ayant nouvellement rejoint le réseau en recevant le message LSP envoyé par le voisin ayant nouvellement rejoint le réseau.
